# DEMANDE DE BREVET EUROPEEN

(11) **EP 1 255 313 A1**
(43) Date de publication de la demande: **06.11.2002**
(21) Numéro de dépôt: 02291049.1
(22) Date de dépôt: 25.04.2002
(51) Int. Cl.: H01M 4/62, H01M 4/32, H01M 4/52

(54) **Electrode non-frittée au nickel**

(30) Priorité: 30.04.2001 FR 0105802
(71) Demandeur: ALCATEL, 75008 Paris (FR)
(72) Inventeur: Bernard, Patrick, 33000 Bordeaux (FR); Goubault, Lionel, 33700 Merignac (FR); Gauthier, Estelle, 33310 Lormont (FR)
(74) Mandataire: Korakis-Ménager, Sophie

(57) **Abrégé**

La présente invention concerne une électrode non-frittée comportant un support conducteur bidimensionnel métallique et une pâte comprenant une matière électrochimiquement active contenant de l'hydroxyde de nickel et un liant qui est un mélange d'un élastomère constitué d'un polymère du butadiène et d'un second polymère.

Le liant est un mélange d'un copolymère du butadiène et d'un copolymère de l'éthylène et de l'acétate de vinyle.

## Description

La présente invention concerne une électrode non-frittée au nickel, en particulier une électrode positive de générateur électrochimique secondaire à électrolyte alcalin.

Elle se rapporte plus précisément à une électrode non-frittée comportant un support conducteur bidimensionnel métallique et une pâte comprenant une matière électrochimiquement active contenant de l'hydroxyde de nickel et un liant qui est un mélange d'un élastomère constitué d'un polymère du butadiène et d'un second polymère.

Il existe plusieurs types d'électrodes, notamment les électrodes frittées et les électrodes non-frittées dites aussi empâtées ou plastifiées.

Les électrodes non-frittées sont les plus largement utilisées aujourd'hui. Par rapport aux autres électrodes, une électrode non-frittée contient une plus grande quantité de matière active, sa capacité volumique est donc augmentée et son coût de fabrication est plus faible.

Une électrode non-frittée se compose d'un support servant de collecteur de courant sur lequel on enduit une pâte contenant la matière active et un liant, auquel on ajoute le plus souvent un matériau conducteur. Elle est traditionnellement réalisée par dépôt de la pâte dans un support conducteur tridimensionnel poreux comme un feutre ou une mousse, métallique ou en carbone.

Pour des raisons de coût, on se dirige maintenant vers l'utilisation de support bidimensionnel.

Le document JP-3 165 469 propose une électrode de nickel comprenant un support conducteur poreux bidimensionnel, tel une grille, un métal déployé ou un métal perforé, recouvert d'une pâte comportant de l'hydroxyde de nickel, un matériau conducteur et un liant thermoplastique, comme un copolymère butylène / éthylène / styrène. Afin d'assurer la fixation de la matière active sur le support, on presse à chaud un séparateur sur chaque face de l'électrode.

Le document EP-0 750 358 décrit une électrode de nickel non-frittée dont le support est une plaque métallique ondulée où on a formé des aspérités pour accrocher une couche micro rugueuse composée de poudre de nickel et/ou de cobalt liée par de l'alcool butadiène PVAI. Sur cette couche, on dépose une pâte comprenant de la carboxyméthylcellulose CMC et un copolymère styrène / butadiène SBR.

Relativement à cet art antérieur, il a été recherché d'améliorer les tenues mécanique et chimique, notamment vis à vis de l'oxydation électrochimique.

Le document EP-0 930 663 propose une électrode non-frittée au nickel à collecteur bidimensionnel dont le liant est un mélange d'un élastomère et d'un polymère cristallin. L'élastomère est choisi parmi un copolymère de styrène / éthylène / butylène / styrène SEBS, un terpolymère de styrène / butadiène / vinylpyridine SBVR et un copolymère de styrène / butadiène SBR éventuellement carboxylé. Le polymère cristallin est choisi parmi une polyoléfine comme le polyéthylène PE et un polymère fluoré comme un copolymère fluoré d'éthylène et de propylène, le polytétrafluoroéthylène PTFE et l'hexafluoropropylène HFP.

Il s'avère qu'un tel liant à polymère fluoré ne permet pas une adhésion et une cohésion suffisante à l'électrode et entraîne une perte de matière active.

De plus, un tel liant a un comportement filmogène entraînant des irrégularités liées à la présence en quantité importante d'un polymère cristallin à haute température de fusion.

L'invention résout ce problème et, pour ce faire, conformément à l'invention, le liant est un mélange d'un copolymère du butadiène et d'un copolymère de l'éthylène et de l'acétate de vinyle EVA.

Cette composition du liant permet d'assurer des propriétés mécaniques améliorées de l'électrode, en particulier une élasticité, une cohésion inter-grains et une adhérence sur le support conducteur correctes.

L'EVA est de préférence une dispersion aqueuse d'un copolymère d'acétate de vinyle et d'éthylène. De préférence de l'alcool polyvinylique est ajouté à la solution aqueuse pour la rendre stable. La proportion d'acétate de vinyle dans le copolymère est de préférence supérieure à 70%.

Selon le mode de réalisation préféré, le taux total en poids de liant est compris entre 1 et 3%.

Avantageusement, la proportion massique de copolymère du butadiène dans le liant est comprise entre 10 et 60 % et la proportion massique de copolymère d'éthylène et d'acétate de vinyle dans le liant est comprise entre 40 et 90 %.

De préférence, le copolymère du butadiène est un copolymère de styrène / butadiène SBR carboxylé.

Il est entendu que le terme « matière électrochimiquement active contenant de l'hydroxyde de nickel » utilisé dans la présente demande peut signifier un hydroxyde de nickel, un hydroxyde contenant principalement du nickel, mais également un hydroxyde de nickel contenant au moins un hydroxyde syncristallisé d'un élément particulier. Un hydroxyde syncristallisé contenu dans l'hydroxyde de nickel est un hydroxyde formant une solution solide avec l'hydroxyde de nickel, c'est-à-dire occupant, en proportion continûment variable, les sites atomiques définis par le réseau cristallin de l'hydroxyde de nickel.

Dans ce sens, de préférence, selon l'invention, la matière électrochimiquement active contenant de l'hydroxyde de nickel contient un élément choisi parmi le zinc, le cadmium ou le magnésium.

Avantageusement, la matière électrochimiquement active contenant de l'hydroxyde de nickel contient également un élément choisi parmi le cobalt, le manganèse, l'aluminium, l'yttrium, le calcium, le strontium, le zirconium, le cuivre, le lithium ou le sodium.

De préférence, l'hydroxyde de nickel est de forme sphéroïdale et présente une granulométrie comprise entre 7 et 20 microns (µm).

Selon le mode de réalisation préféré, l'hydroxyde de nickel est recouvert d'un revêtement à base d'hydroxyde de cobalt éventuellement partiellement oxydé. Ce revêtement peut en outre contenir des éléments choisis parmi le nickel, le zinc, l'aluminium et/ou le magnésium.

La pâte peut contenir en outre une poudre d'un composé de l'yttrium, de préférence de un oxyde d'yttrium comme Y₂O₃ ou de un hydroxyde d'yttrium comme Y(OH)₃.

L'hydroxyde de nickel est un composé peu conducteur qui nécessite l'adjonction d'un matériau conducteur permettant une bonne percolation électrique.

Avantageusement, la pâte contient en outre un composé conducteur constitué essentiellement d'un composé du cobalt, de préférence un oxyde de cobalt comme CoO, le cobalt métal Co ou un hydroxyde de cobalt comme Co(OH)₂.

La pâte peut également contenir en outre une poudre choisie parmi un oxyde de zinc ou un hydroxyde de zinc.

On entend par support bidimensionnel un support plan sur lequel est déposée une couche de pâte. Les propriétés du liant sont donc essentielles pour maintenir la couche sur le support, notamment en cas de spiralage de l'électrode.

Ce support bidimensionnel peut être un feuillard plein ou perforé, un métal déployé, une grille ou un tissu. Il est par exemple un support déployé en nickel ou un feuillard en acier nickelé d'épaisseur comprise entre 20 et 100 microns (µm).

Un exemple de réalisation d'une électrode conforme à l'invention est décrit ci-après.

Un générateur électrochimique secondaire étanche nickel-métal hydrurable (Ni-MH) de format AA, dont la capacité nominale Cn est de 1200 mAh, est fabriqué de la manière suivante.

L'électrode positive est réalisée avec une pâte ayant comme composition pondérale (exprimée en % par rapport au poids de la pâte)

| | |
|---|---|
| matière électrochimiquement active | 92,7% |
| matériau conducteur CoO | 8% |
| liant EVA | 1,5% |
| liant SBR | 0,5% |
| épaississant | 0,3% |

La matière électrochimiquement active pulvérulente est constituée d'un hydroxyde à base de nickel. L'épaississant est le sel de sodium de l'hydroxypropyle methylcellulose (HPMC). La viscosité de la pâte est ajustée avec de l'eau. La pâte est déposée simultanément sur les deux faces d'un support métallique bidimensionnel (acier nickelé perforé d'épaisseur 70 microns) de manière homogène. L'ensemble est ensuite séché pendant 30 minutes à 80°C afin d'en éliminer l'eau, puis laminé à l'épaisseur désirée pour obtenir l'électrode.

Un test comparatif de rendement est ci-après décrit. Dans ce test, sont comparées le mode de réalisation précis conforme à l'invention décrit ci-dessus (accumulateur B), une électrode de l'art antérieur à collecteur tridimensionnel et à liant composé de PTFE (accumulateur A), une électrode à liant composé de EVA et de SBR dont le taux en poids de liant est inférieur à 1 % (accumulateur C) et une électrode à liant composé de EVA et de SBR dont le taux en poids de liant est supérieur à 3 % (accumulateur D).

La première électrode positive de référence (accumulateur A) est réalisée avec une pâte ayant comme composition pondérale (exprimée en % par rapport au poids de la pâte) :

| | |
|---|---|
| matière électrochimiquement active | 92,7% |
| matériau conducteur CoO | 8% |
| liant PTFE | 1% |
| épaississant | 0,3% |

La matière électrochimiquement active pulvérulente est constituée d'un hydroxyde à base de nickel. Le liant est du polytétrafluoroéthylène (PTFE). L'épaississant est le sel de sodium de l'hydroxypropyle methylcellulose (HPMC). La viscosité de la pâte est ajustée avec de l'eau. La pâte est introduite dans le support conducteur servant de collecteur de courant qui est une mousse de nickel de porosité environ 95%. Une fois la pâte introduite dans le support, l'ensemble est séchée afin d'en éliminer l'eau, puis laminé pour obtenir l'électrode à l'épaisseur désirée.

La seconde électrode positive (accumulateur C) est réalisée avec une pâte ayant comme composition pondérale (exprimée en % par rapport au poids de la pâte)

| | |
|---|---|
| matière électrochimiquement active | 92,7% |
| matériau conducteur CoO | 8% |
| liant EVA | 0,5% |
| liant SBR | 0,2% |
| épaississant | 0,3% |

La matière électrochimiquement active pulvérulente est constituée d'un hydroxyde à base de nickel. L'épaississant est le sel de sodium de l'hydroxypropyle methylcellulose (HPMC). La viscosité de la pâte est ajustée avec de l'eau. La pâte est déposée simultanément sur les deux faces d'un support métallique bidimensionnel (acier nickelé perforé d'épaisseur 70 micron) de manière homogène. L'ensemble est ensuite séché pendant 30 minutes à 80°C afin d'en éliminer l'eau, puis laminé à l'épaisseur désirée pour obtenir l'électrode.

La troisième électrode positive (accumulateur D) est réalisée avec une pâte ayant comme composition pondérale (exprimée en % par rapport au poids de la pâte)

| | |
|---|---|
| matière électrochimiquement active | 92,7% |
| matériau conducteur CoO | 8% |
| liant EVA | 3% |
| liant SBR | 1% |
| épaississant | 0,3% |

La matière électrochimiquement active pulvérulente est constituée d'un hydroxyde à base de nickel. L'épaississant est le sel de sodium de l'hydroxypropyle methylcellulose (HPMC). La viscosité de la pâte est ajustée avec de l'eau. La pâte est déposée simultanément sur les deux faces d'un support métallique bidimensionnel (acier nickelé perforé d'épaisseur 70 microns) de manière homogène. L'ensemble est ensuite séché pendant 30 min à 80°C afin d'en éliminer l'eau, puis laminé à l'épaisseur désirée pour obtenir l'électrode.

L'électrode négative de type connu possède comme matière électrochimiquement active un composé intermétallique capable de former un hydrure une fois chargé. Sa capacité est supérieure à celle de l'électrode positive. Chaque électrode positive est accolée à une électrode négative dont elle est isolée par un séparateur constitué d'un non-tissé de polypropylène pour former le faisceau électrochimique. Le faisceau spiralé est inséré dans un godet métallique et imprégné d'un électrolyte alcalin qui est une solution alcaline aqueuse constituée d'un mélange d'hydroxyde de potassium KOH 7,5N, d'hydroxyde de lithium LiOH 0,5N et d'hydroxyde de sodium NaOH 0,4N pour constituer les accumulateurs A, B, C, D.

Après un repos de 48 heures, une formation électrique des accumulateurs est effectuée dans les conditions suivantes :

| | Repos 2h à 85°C |
|---|---|
| Cycle 1 | Charge à 0,1 lc pendant 8 heures à 85°C, où lc est le courant nécessaire pour décharger la capacité nominale Cn du générateur |
| | en 1 heure, |
| | Repos 4h à 20°C |
| | Charge 3h à 0,33 lc |
| | Décharge à 0,66 lc pendant 1h |
| | Charge 1h à lc et 1h12mn à 0.5 lc |
| | Décharge à 0,2 lc jusqu'à une tension d'arrêt de 0,9 Volt ; |
| | |
| Cycles 2 à 10 | Charge à 0,1 lc pendant 16 heures à 20°C, |
| | Décharge à 0,2 lc jusqu'à une tension d'arrêt de 0,9 Volt. |

Les performances électriques des différents accumulateurs sont regroupées dans le tableau ci-dessous :

**TABLEAU**

| Accumulateur : | A | B | C | D |
|---|---|---|---|---|
| Rendement électrochimique des électrodes positives au cycle 10 en mAh/g | 255 | 250 | 235 | 200 |

On comprend d'après ces résultats que l'accumulateur B selon l'invention présente des performances équivalentes à l'accumulateur de référence A. Lorsque le taux total de liant est de 0,7% (accumulateur C), les performances électriques sont inférieures, probablement du fait d'une mauvaise tenue mécanique de l'électrode. Lorsque le taux total de liant est de 4% (accumulateur D), les performances électriques sont inférieures, probablement du fait d'un recouvrement important des particules de matière active.

L'électrode de l'accumulateur B conforme à l'invention présente donc des performances électriques comparables à celles d'une électrode PTFE à collecteur tridimensionnel, tout en présentant les avantages de coût d'un collecteur bidimensionnel et en assurant une meilleure cohésion et adhésion par rapport aux électrodes à liant polymère fluoré.

## Revendications

1. Electrode non-frittée comportant un support conducteur bidimensionnel métallique et une pâte comprenant une matière électrochimiquement active contenant de l'hydroxyde de nickel et un liant qui est un mélange d'un élastomère constitué d'un polymère du butadiène et d'un second polymère, **caractérisée en ce que** le liant est un mélange d'un copolymère du butadiène et d'un copolymère de l'éthylène et de l'acétate de vinyle.

2. Electrode selon la revendication 1, dans laquelle le taux total en poids de liant est compris entre 1 et 3%.

3. Electrode selon l'une des revendications 1 et 2, dans laquelle la proportion massique de copolymère du butadiène dans le liant est comprise entre 10 et 60 % et la proportion massique de copolymère d'éthylène et d'acétate de vinyle dans le liant est comprise entre 40 et 90 %.

4. Electrode selon l'une des revendications précédentes, dans laquelle le copolymère du butadiène est un copolymère de styrène/butadiène carboxylé.

5. Electrode selon l'une des revendications précédentes, dans laquelle la matière électrochimiquement active contenant de l'hydroxyde de nickel contient un élément choisi parmi le zinc, le cadmium ou le magnésium.

6. Electrode selon l'une des revendications précédentes, dans laquelle la matière électrochimiquement active contenant de l'hydroxyde de nickel contient un élément choisi parmi le cobalt, le manganèse, l'aluminium, l'yttrium, le calcium, le strontium, le zirconium, le cuivre, le lithium ou le sodium.

7. Electrode selon l'une des revendications précédentes, dans laquelle l'hydroxyde de nickel est de forme sphéroïdale et présente une granulométrie comprise entre 7 et 20 microns.

8. Electrode selon l'une des revendications précédentes, dans laquelle ladite pâte contient en outre une poudre d'un composé de l'yttrium.

9. Electrode selon la revendication 8, dans laquelle ladite poudre est un oxyde d'yttrium ou un hydroxyde d'yttrium.

10. Electrode selon l'une des revendications précédentes, dans laquelle ladite pâte contient en outre un composé conducteur constitué essentiellement d'un composé du cobalt.

11. Electrode selon la revendication 10, dans laquelle ledit composé est choisi parmi un oxyde de cobalt, le cobalt métal ou un hydroxyde de cobalt.

12. Electrode selon l'une des revendications précédentes, contenant en outre une poudre choisie parmi un oxyde de zinc ou un hydroxyde de zinc.

13. Générateur électrochimique secondaire à électrolyte alcalin comprenant une électrode selon l'une quelconque des revendications précédentes.
